# FASCICULE DE BREVET EUROPEEN

(11) **EP 3 707 320 B1**
(45) Date de publication et mention de la délivrance du brevet: **15.09.2021**
(21) Numéro de dépôt: 18814893.6
(22) Date de dépôt: 06.12.2018
(51) Int. Cl.: E04H 4/12, F04D 13/06, B01D 35/26, B01D 35/027, C02F 1/00, C02F 103/42

(54) **PROCÉDÉ DE FILTRATION D'EAU DANS UN BASSIN, GROUPE DE FILTRATION POUR METTRE EN OEUVRE LEDIT PROCÉDÉ ET POMPE HYDRAULIQUE CENTRIFUGE ASSOCIÉE AUDIT GROUPE DE FILTRATION**
VERFAHREN ZUM FILTERN VON WASSER IN EINEM BECKEN, FILTRATIONSEINHEIT ZUR DURCHFÜHRUNG DES BESAGTEN VERFAHRENS UND MIT BESAGTER FILTRATIONSEINHEIT ASSOZIIERTE HYDRAULISCHE KREISELPUMPE
METHOD FOR FILTERING WATER IN A BASIN, FILTRATION UNIT FOR IMPLEMENTING SAID METHOD AND CENTRIFUGAL HYDRAULIC PUMP ASSOCIATED WITH SAID FILTRATION UNIT

(30) Priorité: 22.12.2017 FR 1763082
(43) Date de publication de la demande: 16.09.2020
(73) Titulaire: Groupe Waterair, 68580 Seppois le Bas (FR)
(72) Inventeur: MEHEUX, Luc, 90100 DELLE (FR); STEINBAUER, Thierry, 90200 GIROMAGNY (FR)
(74) Mandataire: Cabinet Laurent & Charras
(86) Numéro de dépôt international: PCT/EP2018/083752
(87) Numéro de publication internationale: WO 2019/121031

(56) Documents cités:
- WO-A1-03/028847
- WO-A1-2012/021935
- FR-A- 1 533 814
- FR-A7- 2 398 435
- US-A1- 2017 218 977

## Description

### Domaine technique :

La présente invention concerne un procédé de filtration d'eau dans un bassin notamment une piscine, dans lequel on crée une circulation de l'eau du bassin à travers au moins un groupe de filtration comportant au moins une bouche d'aspiration et au moins un orifice de refoulement, ledit groupe de filtration comportant une pompe hydraulique centrifuge et au moins une unité de filtration, ladite pompe hydraulique centrifuge comportant un moteur électrique couplé à une turbine centrifuge logée dans un corps de pompe, et ledit moteur électrique étant un moteur étanche, sans balai, autopiloté, alimenté en courant continu à très basse tension de 12V à 30V.

L'invention concerne également un groupe de filtration permettant la mise en œuvre dudit procédé de filtration ainsi qu'une pompe hydraulique centrifuge associée audit groupe de filtration, et un bassin pourvu dudit groupe de filtration.

### Technique antérieure :

Il existe plusieurs modèles de groupes de filtration pour bassin, notamment pour piscine, dont celui décrit dans la publication WO 03/028847 A1 appartenant à la demanderesse, qui permet de nettoyer l'eau d'un bassin en mode continu ou en mode discontinu en fonction des conditions d'exploitation du bassin en aspirant l'eau à la surface du bassin à travers une unité de filtration et en la refoulant dans le bassin à proximité de la zone d'aspiration. Ce groupe de filtration a l'avantage d'être attenant à une paroi dudit bassin, ce qui permet de réduire avantageusement la longueur des canalisations du circuit hydraulique et de limiter ainsi les pertes de charge pour une efficacité de filtration augmentée. Dans la solution décrite, le groupe de filtration comporte une pompe hydraulique à turbine centrifuge à effet d'aspiration, qui est montée dans le groupe de filtration en aval du média filtrant pour aspirer l'eau à la surface du bassin par dépression au travers du média filtrant. Cette pompe hydraulique centrifuge est disposée préférentiellement suivant un axe vertical dans le groupe de filtration et est pourvue d'un moteur électrique couplé à la turbine centrifuge, également disposé préférentiellement suivant un axe vertical, ledit moteur électrique étant disposé au-dessus du niveau de l'eau du bassin. Cette disposition hors eau du moteur électrique se retrouve dans certaines pompes hydrauliques couplées à ou intégrées dans un groupe de filtration de l'eau d'un bassin, lorsque le moteur électrique n'est pas conçu pour être immergé. En conséquence, cette disposition hors eau impose des contraintes de mise en œuvre visant d'une part à protéger le moteur électrique, son arbre de transmission et ses parties électriques de toute projection d'eau par un ou plusieurs capotages spécifiques, et d'autre part à refroidir le moteur électrique hors eau soit par un circuit hydraulique spécifique raccordé en dérivation du circuit hydraulique principal, soit par un système de refroidissement aéraulique à l'aide d'un ventilateur couplé à l'axe du moteur, mais aussi au niveau de la turbine et de son axe d'entraînement car elle doit être positionnée suffisamment à distance du moteur pour se situer sous le niveau d'eau afin d'être immergée et en charge. Cette installation hors eau nécessite également des dispositions particulières liées à la sécurité des personnes du fait d'une alimentation en 230V AC du moteur électrique à proximité du bassin, à l'encombrement et à l'esthétique étant donné que le groupe de filtration est proéminent au-dessus du niveau de l'eau et de la plage bordant le bassin, aux nuisances sonores engendrées par le fonctionnement du moteur électrique, qui lorsqu'il est refroidi par air peut atteindre un niveau de 70dB, correspondant à une émergence globale qui peut atteindre 13dB, à une fiabilité toute relative et à une durée de vie réduite, dues à l'ambiance chlorée et/ou salée dans laquelle le moteur électrique doit fonctionner qui provoque un vieillissement prématuré des roulements, une corrosion des pièces métalliques, un risque de court-circuit dans les bobinages du moteur, etc. En outre, le moteur électrique utilisé pour cette application est généralement un moteur asynchrone, monophasé, alimenté en courant alternatif, d'une puissance relativement élevée de l'ordre de 500 à 600W, pour un rendement relativement faible entre 45 et 70% selon la taille du moteur. Ce type de moteur électrique est par conséquent énergivore pour des rendements médiocres en termes de conversion électrique/mécanique. De plus, sa vitesse de rotation est relativement élevée de l'ordre de 2900 tr/min à une fréquence électrique de 50Hz, ce qui impacte le rendement de la conversion mécanique/hydraulique, étant donné que la vitesse est l'ennemie du rendement, avec en outre des risques de cavitation.

Il existe d'autres pompes hydrauliques pour filtrer l'eau d'un bassin comme celles décrites dans les publications FR 2 789 599 A1 de la demanderesse, FR 2 848 470 A1, EP 1 632 622 A1 et WO 2012/021935 A1, qui sont montées dans la partie basse du groupe de filtration, c'est-à-dire en dessous du ou des médias filtrants, et qui sont par conséquent totalement immergées, donc silencieuses. Toutefois, certaines pompes sont équipées d'hélice à effet de propulsion et la technologie des moteurs équipant ces pompes n'est pas toujours adaptée à une utilisation immergée dans un milieu chloré et/ou salé. Ainsi, leur durée de vie est limitée étant donné que les parties métalliques des moteurs se corrodent rapidement, nécessitant des interventions fréquentes pour assurer l'entretien et la maintenance de ces pompes. De plus, l'accès à ces pompes est très compliqué et implique de démonter l'ensemble du groupe de filtration pour effectuer les opérations d'entretien et de maintenance, mais également les opérations de démontage pour l'hivernage. Par ailleurs, les pompes à hélice n'ont pas une hauteur manométrique suffisante, de sorte qu'elles perdent en efficacité dès lors que le média filtrant commence à s'encrasser faisant baisser le débit et chuter la puissance de ces moteurs. Ces solutions ne sont donc pas optimales.

Les publications FR 1 533 814 A, US 2017/218977 A1 et FR 2 398 435 A7 proposent des pompes hydrauliques pouvant fonctionner en immersion ou non, et dont le moteur est rendu partiellement étanche vis-à-vis du fluide mis en circulation. Mais les solutions d'isolation décrites sont insuffisantes pour le domaine d'application de l'invention et ne permettent pas de s'affranchir des risques de corrosion notamment.

On connait par ailleurs dans une toute autre application, qui est celle de l'aquariophilie d'eau de mer, une pompe hydraulique à hélice à effet de propulsion, pourvue d'un moteur électrique alimenté en courant continu et conçu de manière étanche, tel que celui décrit dans la publication DE 20 2005 021 216 U1. Cette pompe hydraulique est prévue pour être immergée dans un aquarium d'eau de mer et a pour fonction de brasser l'eau qu'il contient dans le but de la faire remonter à la surface et de l'oxygéner par contact avec l'air en surface. La technologie de ce moteur sans balai permet de l'immerger dans un milieu salé, sans risque de corrosion de ses parties électriques et magnétiques. Par contre, sa conception est telle que son rotor est mobile axialement sur la broche de guidage en direction de la sortie du carter, de sorte que si la rotation du rotor est inversée par erreur, il se déplace axialement, sort en partie du carter et quitte en partie le stator, entraînant son arrêt. Ainsi, ce moteur électrique n'est pas adapté à l'application prévue dans l'invention pour laquelle la pompe hydraulique doit fonctionner en aspiration et non en propulsion. En effet, la force d'aspiration exercée axialement sur le rotor engendrerait inévitablement le découplage magnétique du rotor par rapport au stator, rendant impossible le fonctionnement de la pompe hydraulique et toute tentative de filtration de l'eau du bassin.

### Exposé de l'invention :

La présente invention vise à pallier ces inconvénients en proposant un procédé de filtration de l'eau d'un bassin, notamment d'une piscine, mettant en œuvre une pompe hydraulique centrifuge qui soit sécurisée, silencieuse, fiable, durable, sans entretien ni pièce d'usure, discrète et totalement intégrable dans la plage entourant le bassin, d'une faible puissance électrique, donc à basse consommation d'énergie, pour un meilleur rendement et une efficacité accrue, cette pompe pouvant être alimentée en très basse tension provenant d'une énergie électrique renouvelable comme l'énergie solaire et/ou éolienne par exemple, cette pompe permettant en outre de s'affranchir de tout circuit de refroidissement dédié, pouvant être facilement mise en œuvre et intégrable dans un groupe de filtration neuf ou existant, restant facilement accessible, et limitant le risque de cavitation.

Dans ce but, l'invention concerne un procédé de filtration du genre indiqué en préambule, caractérisé en ce que l'on monte ladite pompe hydraulique centrifuge dans la partie supérieure dudit au moins un groupe de filtration de manière totalement intégrée dans un couloir d'amenée d'eau qui est sensiblement horizontal et ouvert en direction dudit bassin par ladite bouche d'aspiration, pour que ladite pompe hydraulique centrifuge soit aisément accessible par le dessus dudit groupe de filtration et que le moteur électrique de ladite pompe soit en partie ou en totalité immergé dans l'eau qui circule dans ledit couloir d'amenée d'eau, de sorte que ledit moteur électrique est automatiquement refroidi et insonorisé par l'eau circulant dans ledit groupe de filtration.

De manière préférentielle, on utilise un moteur électrique comportant un rotor à aimant(s) permanent(s) entrainé en rotation par un champ tournant généré par un stator pourvu de bobines d'excitation dont l'alimentation électrique est autopilotée par un circuit électronique, ledit rotor et ledit stator étant encapsulés chacun dans une matière synthétique formant une résine étanche, isolante et résistante à l'eau chlorée et à l'eau salée.

On conditionne avantageusement le stator dudit moteur électrique dans un carter, on fabrique ledit carter avec un flasque supérieur en une seule pièce, on fabrique ledit corps de pompe avec un flasque inférieur en une seule pièce, et on assemble ledit moteur électrique audit corps de pompe et audit groupe de filtration par leurs flasques inférieur et supérieur respectifs.

Dans la forme préférée de l'invention, on monte la turbine centrifuge sur une extrémité inférieure du rotor qui sort du carter, et on verrouille la position axiale du rotor entre un palier supérieur et un palier inférieur pour garantir son parfait alignement magnétique avec ledit stator. De même, on guide en rotation ledit rotor par une broche de guidage axiale, fixée au carter qui fait office de palier lisse.

Avantageusement, on peut faire tourner ledit moteur électrique à une vitesse sensiblement constante inférieure aux 2900 tr/mn couramment rencontrés dans les moteurs asynchrones, et préférentiellement inférieure à 2000 tr/mn, pour générer un débit d'eau compris entre 4 et 12 m3/h en fonction du point de fonctionnement de la dite pompe hydraulique centrifuge. On peut même déterminer le point de fonctionnement de ladite pompe hydraulique centrifuge en fonction du volume d'eau contenu dans le bassin en paramétrant la vitesse de rotation dudit moteur électrique en usine.

En fonction de la conception du groupe de filtration, on peut disposer ladite pompe hydraulique centrifuge en aval de ladite au moins une unité de filtration.

De manière tout à fait avantageuse, on peut couvrir la consommation électrique totale annuelle de ladite pompe hydraulique centrifuge par la production annuelle d'une source d'énergie électrique renouvelable. A titre d'exemple, on peut utiliser comme source d'énergie électrique renouvelable la production annuelle de deux panneaux photovoltaïques de 250W crête maximum chacun.

Le but de l'invention est également atteint par un groupe de filtration permettant la mise en œuvre du procédé de filtration défini ci-dessus, ainsi que par une pompe hydraulique centrifuge agencée pour équiper ledit groupe de filtration caractérisés en ce que ladite pompe hydraulique centrifuge est agencée pour être montée dans la partie supérieure dudit groupe de filtration de manière totalement intégrée dans un couloir d'amenée d'eau qui est sensiblement horizontal et ouvert en direction dudit bassin par ladite bouche d'aspiration pour que ladite pompe hydraulique centrifuge soit aisément accessible par le dessus dudit groupe de filtration et que ledit moteur électrique de ladite pompe soit en partie ou en totalité immergée dans l'eau qui circule dans ledit couloir d'amenée d'eau de sorte que ledit moteur électrique est automatiquement refroidi et insonorisé par l'eau circulant dans ledit groupe de filtration.

Ladite turbine centrifuge est avantageusement installée à un niveau inférieur à celui du fond du couloir d'amenée d'eau pour être en charge en permanence, et favoriser ainsi un amorçage instantané de ladite pompe.

En outre, le circuit électronique du moteur électrique peut être paramétré en usine pour déterminer une vitesse de rotation adaptée au volume d'eau contenu dans le bassin, permettant également d'adapter au plus juste la consommation d'énergie de ladite pompe hydraulique centrifuge.

Dans une forme préférée de l'invention, le corps de pompe comporte deux demi-coquilles entre lesquelles tourne ladite turbine centrifuge, au moins une entrée axiale et une sortie radiale destinées à communiquer respectivement avec ladite bouche d'aspiration et ledit orifice de refoulement dudit groupe de filtration, cette turbine centrifuge pouvant être une turbine dite « ouverte » pourvue d'ailettes radiales portées par un seul plateau diffuseur.

En complément, ledit plateau diffuseur peut comporter au moins un trou formant un passage de fluide en direction de ladite broche de guidage, qui est avantageusement réalisée en une matière résistante à la corrosion.

Les buts de l'invention sont également atteints par un bassin d'eau, notamment une piscine, comportant au moins un groupe de filtration agencé pour mettre en œuvre le procédé de filtration défini ci-dessus de sorte à créer un bassin à basse consommation d'énergie.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue en perspective d'un groupe de filtration selon l'invention attenant à une paroi verticale d'un bassin,
- la figure 2 est une vue en perspective du groupe de filtration de la figure 1 avant son assemblage avec la paroi dudit bassin,
- la figure 3 est une vue de dessus du groupe de filtration de la figure 1,
- la figure 4 est une vue en coupe axiale selon l'axe IV-IV du groupe de filtration de la figure 3,
- la figure 5 est une vue éclatée d'une pompe hydraulique centrifuge selon l'invention entrant dans le groupe de filtration des figures 1 à 4,
- la figure 6 est une vue en coupe axiale de la pompe hydraulique centrifuge de la figure 5 assemblée et montée dans le groupe de filtration,
- la figure 7 est une vue en perspective de la pompe hydraulique centrifuge de la figure 6,
- la figure 8 est une vue de dessous de la pompe hydraulique centrifuge de la figure 7 sans la turbine centrifuge, et
- la figure 9 est une vue de dessous d'une variante de la pompe hydraulique centrifuge de la figure 7, sans la turbine centrifuge.

### Illustrations de l'invention et différentes manières de la réaliser :

Dans les exemples de réalisation illustrés, les éléments ou parties identiques portent les mêmes numéros de référence.

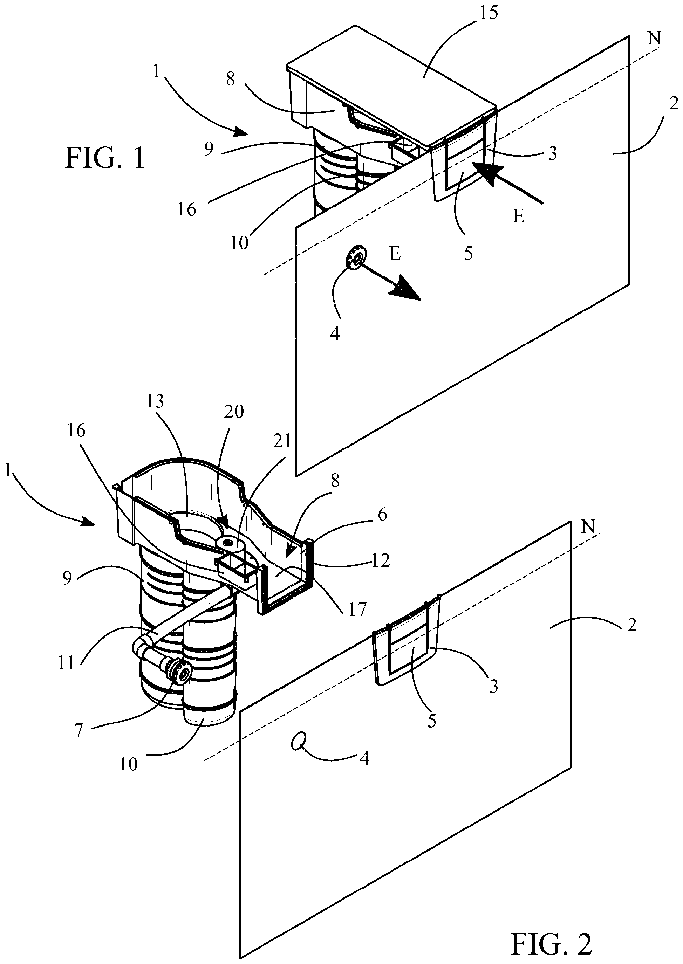

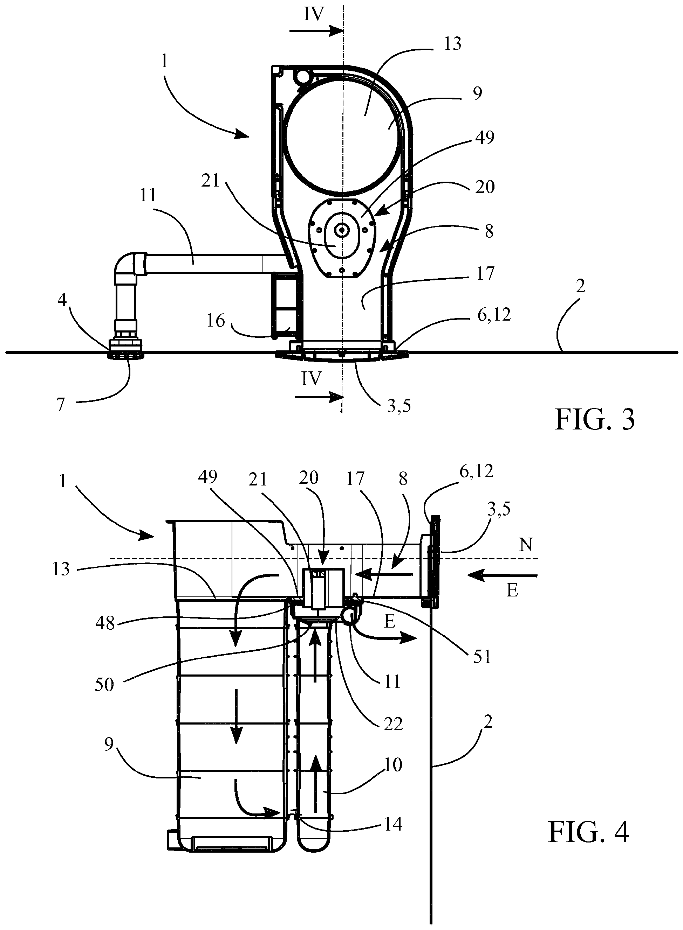

En référence aux figures 1 à 4, le groupe de filtration 1 selon l'invention est destiné à débarrasser l'eau contenue dans le bassin des particules solides provenant de l'environnement extérieur du bassin et des utilisateurs, et de diffuser le ou les produits de désinfection. Il est destiné à cet effet à être assemblé à l'arrière d'une paroi 2 d'un bassin (non représenté). On appelle «bassin» tout contenant d'eau à destination ludique, récréative, bien-être, thérapeutique, comme une piscine, un bain à remous, un bassin de plongeon, ou similaire, sans que ces exemples ne soient limitatifs. La paroi 2 est de préférence une paroi périphérique du bassin, verticale ou sensiblement verticale. Dans l'exemple représenté, le groupe de filtration 1 est attenant à la face arrière de la paroi 2 du bassin, mais pourrait être éloigné et logé dans un local technique par exemple. L'intérêt de monter le groupe de filtration 1 attenant au bassin réside dans la réduction de la longueur des canalisations du circuit hydraulique, ayant pour effet de limiter les pertes de charge et le risque de fuite. Pour permettre une communication hydraulique entre le bassin et le groupe de filtration 1, la paroi 2 du bassin comporte une ouverture d'aspiration 3 située en partie supérieure, de préférence au moins en partie immergée sous le niveau d'eau N contenu dans le bassin, et un orifice de refoulement 4 situé à proximité de l'ouverture d'aspiration 3, de préférence totalement immergé sous le niveau de l'eau N. L'ouverture d'aspiration 3 est limitée par un volet pivotant 5 ou similaire pour créer, lorsque la pompe est en fonctionnement, une lame d'eau accélérant la vitesse d'aspiration et facilitant ainsi l'écrémage de surface. Le groupe de filtration 1 comporte un circuit hydraulique s'étendant entre une bouche d'aspiration 6 et un raccord de refoulement 7 en passant par une pompe hydraulique centrifuge 20, dénommée dans la suite de la description « pompe 20 », pour créer une circulation forcée de l'eau du bassin symbolisée par les flèches E représentées dans les figures 1 et 4. Le circuit hydraulique comporte en outre un couloir d'amenée d'eau 8, une cuve de filtration 9 contenant une ou plusieurs unités de filtration (non représentées), une colonne d'aspiration 10 et un conduit de refoulement 11. Le couloir d'amenée d'eau 8 est sensiblement horizontal, ouvert en direction du bassin par la bouche d'aspiration 6 qui est fixée à la paroi 2 du bassin dans l'alignement de son ouverture d'aspiration 3 via un joint d'étanchéité 12 ou similaire. Le couloir d'amenée d'eau 8 débouche dans la cuve de filtration 9 d'axe sensiblement vertical via une ouverture axiale 13. La ou les unités de filtration contenues dans la cuve de filtration 9 comportent des médias filtrants de type connu, tels que du sable de différentes granulométries, du charbon actif, des filtres textiles, et similaires, conditionnés dans des poches filtrantes ou des cartouches filtrantes interchangeables. La cuve de filtration 9 communique avec la colonne d'aspiration 10 via un conduit radial 14 en partie inférieure (fig. 4). La colonne d'aspiration 10 d'axe sensiblement vertical, s'étend parallèlement à la cuve de filtration 9 et débouche dans le conduit de refoulement 11. Le conduit de refoulement 11 est sensiblement horizontal et se termine par le raccord de refoulement 7 fixé via un joint d'étanchéité (non visible) dans l'orifice de refoulement 4 de la paroi 2 du bassin. Dans l'exemple représenté, la pompe 20 est disposée en aval de la cuve de filtration 9, et plus exactement entre la colonne d'aspiration 10 et le conduit de refoulement 11, c'est-à-dire en partie haute du groupe de filtration 1. Ainsi, la pompe 20 est protégée de tout risque d'encrassement. Dans l'hypothèse où la ou les unités de filtration prévues dans la cuve de filtration 9 seraient défaillantes, l'architecture particulière de la turbine centrifuge 23 (architecture ouverte) permet l'évacuation automatique des impuretés et prémunit ainsi la pompe 20 de tout risque d'encrassement. Bien entendu, cette disposition n'est pas exclusive et la pompe 20 pourrait être disposée en amont de la cuve de filtration 9. Le fonctionnement de la pompe 20 crée une dépression dans la colonne d'aspiration 10 puis dans la cuve de filtration 9 qui a pour effet d'aspirer l'eau à la surface du bassin via l'ouverture d'aspiration 3 et la bouche d'aspiration 6 en ouvrant le volet pivotant 5 pour créer une circulation forcée E de l'eau aspirée à travers la ou les unités de filtration contenues dans la cuve de filtration 9 avant de la refouler dans le bassin débarrassée de toutes ses particules solides, telles que feuilles, insectes, sables, etc.

Comme représenté dans ces figures, et notamment dans la figure 4, la pompe 20 selon l'invention est disposée dans la partie supérieure du groupe de filtration 1, de manière totalement intégrée dans le couloir d'amenée d'eau 8, et totalement immergée dans l'eau qui circule dans ce couloir. Bien entendu, elle peut n'être que partiellement immergée. Le couloir d'amenée d'eau 8 est obturé par un capot 15 amovible, qui peut être plat et parfaitement intégré dans le plan de la plage entourant le bassin sans aucune partie proéminente (fig. 1). Ce capot 15 peut être aisément adapté à l'esthétique de la plage du bassin et comporter par exemple une margelle si la plage en comporte. Le groupe de filtration 1 comporte également un boiter de raccordement 16 contenant les bornes de raccordement entre une source d'alimentation électrique et le moteur électrique 21 qui équipe la pompe 20.

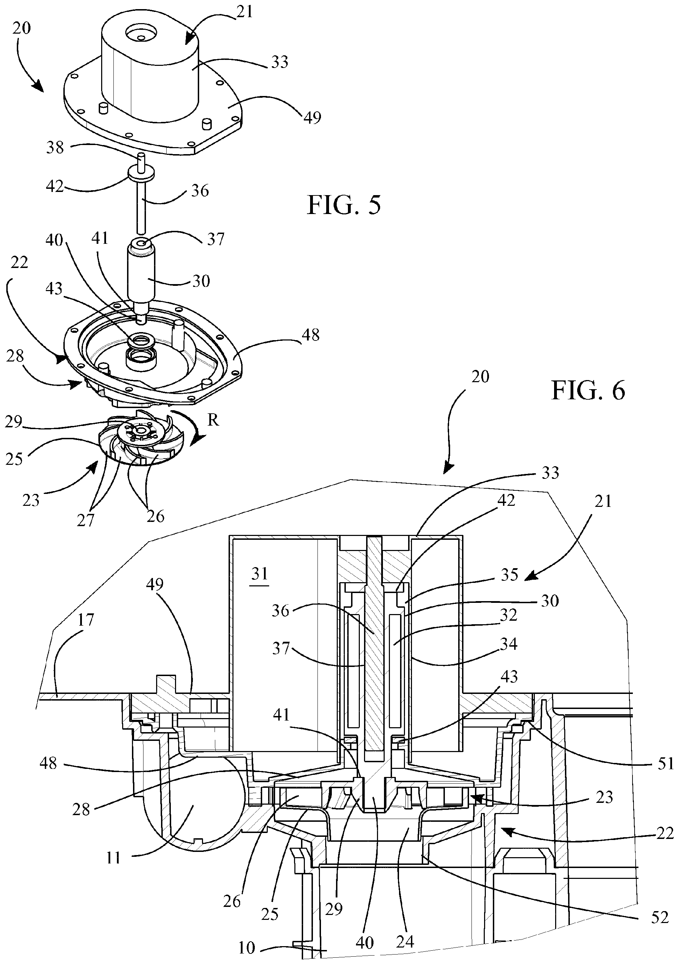

La pompe 20 de l'invention est décrite plus particulièrement en référence aux figures 5 à 8. Elle comporte un moteur électrique 21 et un corps de pompe 22 dans lequel est logée une turbine centrifuge 23 couplée à l'arbre de transmission dudit moteur pour être entrainée en rotation dans un sens générant une aspiration de l'eau, le sens de rotation étant dans l'exemple représenté le sens horaire, représenté par la flèche R (fig. 5). La turbine centrifuge 23 est installée sous le fond 17 du couloir d'amenée d'eau 8, qui correspond au niveau d'eau le plus bas admissible dans le groupe de filtration 1. De ce fait, elle est toujours en charge, et l'amorçage de la pompe 20 est instantané et automatique. La turbine centrifuge 23 comporte une embouchure axiale d'aspiration 24 prévue dans un plateau diffuseur 25 (fig. 6). Le plateau diffuseur 25 porte des ailettes radiales 26 incurvées définissant entre elles des canaux d'aspiration 27 (fig. 5), s'étendant de l'embouchure axiale d'aspiration 24 en direction d'un diffuseur 28 et d'une embouchure radiale de refoulement (non visible sur les figures) en communication avec le conduit de refoulement 11 (fig. 6). Il s'agit d'une turbine centrifuge dite « ouverte » puisque ses ailettes radiales 26 ne sont pas enfermées entre deux plateaux diffuseurs. Elle est ainsi autonettoyante, ce qui peut être un avantage en cas de disfonctionnements de l'unité de filtration comme évoqué précédemment, et dispose d'une plus grande plage de débit pour une puissance de moteur donné. La turbine centrifuge 23 comporte en outre un moyeu central 29 pour être couplé à l'arbre de transmission du moteur électrique 21 (fig. 6). Bien entendu, tout autre type de turbine centrifuge équivalente peut convenir. Le plateau diffuseur 25 de la turbine centrifuge 23 et/ou le diffuseur 28 du corps de pompe 22 peuvent comporter en outre un ou plusieurs trous (non représentés) permettant une meilleure montée en pression dans la partie centrale 28a, 54a du corps de pompe 22, et donc une meilleure lubrification de la broche de guidage 36.

Le moteur électrique 21 est de manière préférentielle un moteur électrique sans balai, autopiloté, à courant continu et étanche. La technologie du moteur 21 peut correspondre à celle partiellement décrite dans la publication DE 20 2005 021 216 U1, sans que cet exemple ne soit limitatif. Il comporte, en référence plus particulièrement aux figures 5 et 6, un rotor 30 et un stator 31, le rotor 30 comportant un ou plusieurs aimants permanents 32 pour être entrainé en rotation par un champ tournant généré par le stator 31. Le stator 31 comporte à cet effet des bobines d'excitation (non représentées) alimentées par un circuit électronique ayant pour fonction, de commuter l'alimentation électrique entre les bobines d'excitation pour créer ledit champ tournant. Le carter 33 est pourvu d'un alésage traversant formant un logement axial 34 pour y recevoir le rotor 30 moyennant un jeu définissant avec le stator 31 un entrefer périphérique 35. Le carter 33 est rempli d'une matière synthétique formant une résine isolante et étanche, dans laquelle sont encapsulées les bobines d'excitation du stator 31. Cette matière de remplissage permet à la fois de maintenir les bobines d'excitation l'une par rapport à l'autre de dissiper la chaleur dégagée par effet Joule et de protéger l'ensemble du stator 31 de l'humidité. Le carter 33 peut également être réalisé dans une telle matière isolante et étanche, ou dans toute autre matière équivalente. Le rotor 30 est réalisé dans une matière synthétique formant une résine isolante et étanche dans laquelle sont encapsulés les aimants permanents 32. Cette matière permet à la fois de maintenir les aimants permanents l'un par rapport à l'autre, de dissiper la chaleur dégagée par effet Joule et de protéger le rotor 30 de l'humidité. Le rotor 30 est guidé en rotation par une broche de guidage 36 axiale, assemblée et fixée au carter 33 par tout moyen de fixation approprié. L'extrémité inférieure 40 du rotor 30 sort du carter 33 du côté du corps de pompe 22 pour former un arbre de transmission lié en rotation à la turbine centrifuge 23 par tout moyen de fixation approprié et par exemple par vissage. La turbine centrifuge 23 est positionnée axialement par rapport au rotor 30 au moyen d'un épaulement 41 délimitant ladite extrémité inférieure 40. Le rotor 30 est quant à lui positionné axialement par rapport au stator 31 au moyen de deux paliers 42, 43, à savoir un palier supérieur 42 disposé entre le rotor 30 et le carter 33, et un palier inférieur 43 disposé entre le rotor 30 et un flasque inférieur 48 du corps de pompe 22. Par cette construction particulière, le rotor 30 est empêché de se déplacer axialement et son alignement magnétique avec le stator 31 est garanti quel que soit l'effort d'aspiration exercé par la turbine centrifuge 23. Les matières qui constituent le rotor 30, les paliers 42, 43 et la broche de guidage 36 sont choisies pour garantir un guidage axial et radial du rotor 30 sans roulement à billes, uniquement par friction avec un faible coefficient de frottement, garantissant ainsi une insensibilité des moyens de guidage à l'ambiance chlorée ou saline de l'eau du bassin. A titre d'exemple, la broche de guidage 36 et les paliers 42, 43 sont en acier inoxydable ou en titane, alors que le rotor 30 est dans une matière synthétique thermoplastique, telle que l'acrylonitrile styrène acrylate (ASA), le polyoxyméthylène (POM), un polyamide (PA6.6), ou similaire, avec ou sans adjuvant, enrichi avec une matière fluorée telle qu'un téflon qui limite la friction.

Le carter 33 est solidaire d'un flasque supérieur 49 obtenu de préférence d'une seule pièce avec le carter 33 lors de sa fabrication par moulage d'une matière plastique. Le corps de pompe 22 comporte un flasque inférieur 48 en correspondance du flasque supérieur 49 du carter 33. Les flasques inférieur 48 et supérieur 49 s'étendent sensiblement dans un plan perpendiculaire à l'axe du moteur électrique 21 et permettent d'assembler simultanément ledit moteur 21 au corps de pompe 22 et au groupe de filtration 1, par tout type d'organes de fixation adapté permettant un assemblage réversible, c'est-à-dire démontable. Le corps de pompe 22 comporte deux demi coquilles, une demi coquille supérieure intégrée dans le flasque inférieur 48 et une demi coquille inférieure intégrée dans une cuvette 50. La cuvette 50 est positionnée au sommet de la colonne d'aspiration 10 (fig. 4) à un niveau situé sous le fond 17 du couloir d'amenée d'eau 8, et formant un siège 51 pour recevoir la pompe 20 (fig. 6). La cuvette 50 comporte une entrée axiale 52 (fig. 6) mettant en communication l'embouchure axiale d'aspiration 24 de la turbine centrifuge 23 avec la colonne d'aspiration 10, et une sortie radiale (non visible) mettant en communication les canaux d'aspiration 27 de la turbine 23 avec le conduit de refoulement 11 du groupe de filtration 1 débouchant dans le bassin par l'orifice de refoulement 4 (fig. 4). La pompe 20 est centrée dans la cuvette 50 prévue dans la partie supérieure de la colonne d'aspiration 10 et est solidairement fixée au groupe de filtration 1. Les moyens de fixation utilisés étant réversibles pour qu'elle puisse être aisément démontée et remontée si nécessaire.

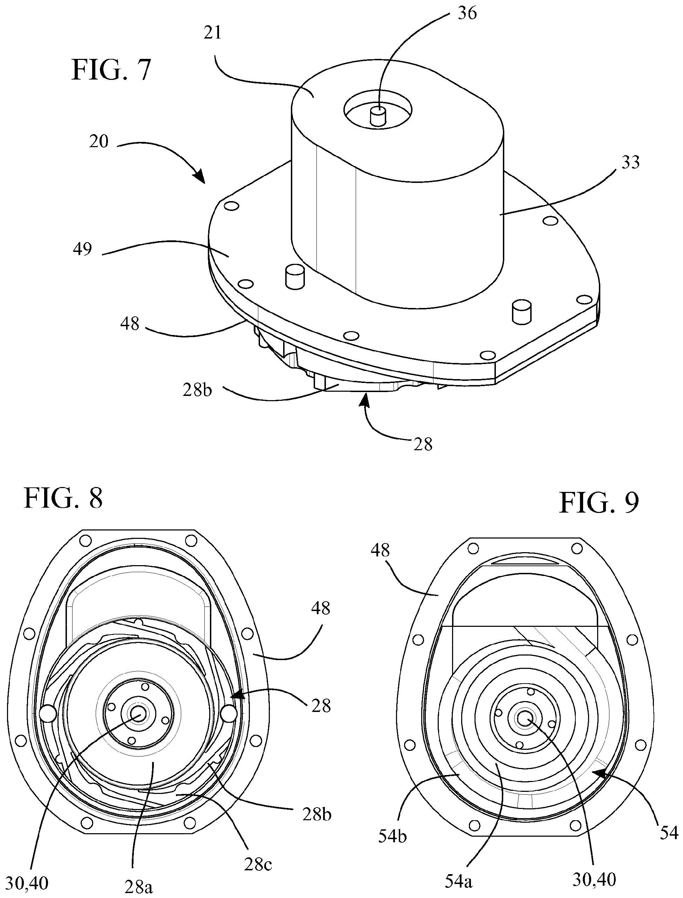

Selon la technologie choisie pour la pompe 20, le corps de pompe 22 peut définir avec la turbine centrifuge 23 un diffuseur 28 selon les figures 5 à 8, ou une volute 54 selon la figure 9, ayant pour effet de transformer l'énergie cinétique du fluide en énergie potentielle. En référence à la figure 8, le diffuseur 28 qui est prévu dans la paroi inférieure du flasque inférieur 48 du corps de pompe 22, située en regard des ailettes radiales 26 de la turbine centrifuge 23, comporte une partie centrale conique 28a au droit de laquelle tourne ladite turbine centrifuge 23, et une partie périphérique pourvue d'ailettes radiales 28b inclinées dans la même orientation ou une orientation similaire que les ailettes radiales 26 de la turbine centrifuge 23 ménageant entre elles des canaux de refoulement 28c pour diriger le fluide vers le conduit de refoulement 11 via la sortie radiale de la cuvette 50. La partie centrale conique 28a du diffuseur peut être percée d'un ou de plusieurs trous pour favoriser la lubrification de la broche de guidage 36. En référence à la figure 9, la volute 54 qui est prévue dans la paroi inférieure du flasque inférieur 48 du corps de pompe 22, située en regard des ailettes radiales 26 de la turbine centrifuge 23, comporte une partie centrale 54a sensiblement plane au droit de laquelle tourne ladite turbine centrifuge 23, et une spirale périphérique 54b pour diriger le fluide vers le conduit de refoulement 11 via la sortie radiale de la cuvette 50.

Le moteur électrique 21 est avantageusement alimenté en courant continu à très basse tension (TBT), de 12VDC à 30 VDC par exemple et conformément à la réglementation en vigueur. Le câble d'alimentation (non représenté) du circuit électronique de pilotage du moteur électrique 21 est gainé pour être complètement isolé et résister à une immersion permanente. Il traverse le carter 33 par une ouverture (non représentée) pourvue d'un joint d'étanchéité tel qu'un presse-étoupe (non représenté), par exemple en partie supérieure du carter 33 pour être facilement accessible et raccordé à une source d'alimentation électrique via le boitier de raccordement 16. Ce moteur électrique 21 a la particularité de consommer très peu de puissance, de l'ordre de 150Wh, soit trois à six fois moins qu'un moteur asynchrone traditionnellement utilisé pour cette application. Il peut ainsi être alimenté exclusivement par une source d'énergie électrique renouvelable, telle qu'à titre d'exemple l'énergie solaire ou l'énergie éolienne. Plus particulièrement, sa puissance annuelle consommée peut être couverte exclusivement par la production électrique annuelle d'une source d'énergie renouvelable, comme à titre d'exemple deux panneaux photovoltaïques de 250W crête maximum chacun Bien entendu, cet exemple n'est pas limitatif et s'étend à toute autre source d'énergie renouvelable. Il peut également être alimenté par le réseau électrique disponible. Le rendement de ce type de moteur est très bon, de l'ordre de 70 à 90%, soit plus du double que le rendement des moteurs asynchrones traditionnellement utilisés. De même, sa vitesse de rotation est faible, par exemple inférieure à 2900tr/mn et préférentiellement inférieure à 2000 tr/mn correspondant à une fréquence de l'ordre de 33Hz, réduite d'environ un tiers par rapport à celle des moteurs asynchrones traditionnellement utilisés pour l'application de l'invention, sans que ces valeurs ne soient limitatives. Cette vitesse de rotation plus lente permet d'augmenter avantageusement le rendement de la conversion mécanique/hydraulique de la pompe 20 et d'éviter les phénomènes de cavitation en conservant un rendement électrique élevé. La fréquence de rotation du moteur électrique 21 est adaptable pour modifier la consommation de la pompe 20 ou son débit. La pompe 20 peut notamment être calibrée en usine afin d'être ajustée au mètre cube près à la taille du bassin, et répondre ainsi au plus proche du besoin du client. Une fois programmée, la vitesse de rotation du moteur 21 reste constante. Le fait de pouvoir programmer les conditions de fonctionnement du moteur 21 en usine permet de créer avec une seule et même conception de moteur 21 une gamme de pompes 20 dont le débit et la consommation énergétique sont adaptés au volume du bassin à filtrer. En outre, et grâce à la technologie du moteur électrique 31 utilisé, la pompe 20 de l'invention est capable de fonctionner à une hauteur manométrique d'au moins 4m. Cette caractéristique de fonctionnement garantit la circulation de l'eau du bassin au travers du groupe de filtration 1 même en cas d'encrassement de l'unité de filtration, ce qui constitue une sécurité complémentaire.

La nouvelle technologique de groupe de filtration 1 selon l'invention offre ainsi une solution très économe en énergie qui peut être autoproduite, et qui est nettement plus performante techniquement. Ainsi, le groupe de filtration 1 et le bassin qu'il équipe sont dits « à basse consommation d'énergie » ou « à faible émission de carbone ». Le terme « basse consommation d'énergie » désigne un produit pour lequel la consommation énergétique nécessitée pour le faire fonctionner est notoirement diminuée par rapport à des produits standards. Si le produit est à basse consommation d'énergie alors implicitement il génère moins d'émission de carbone.

De plus, la conception de ce moteur électrique 21, sans pièce d'usure et rendu totalement étanche dans des matières synthétiques compatibles avec l'eau salée ou l'eau chlorée du bassin, garantit un fonctionnement d'au moins 28000 heures sans aucune intervention de maintenance, ce qui équivaut à une durée d'utilisation d'environ 10 ans dans des conditions normales d'exploitation du bassin.

Le procédé de filtration selon l'invention permet avantageusement d'assurer la filtration de l'eau d'un bassin au moyen de la pompe 20 accessible par le dessus du groupe de filtration 1, en partie ou totalement immergée sous le niveau de l'eau N du bassin, grâce à son moteur électrique 21 qui peut être en partie ou en totalité immergé dans l'eau circulant dans le couloir d'amenée d'eau 8 du groupe de filtration 1. Le terme « accessible » signifie qu'un opérateur ou un utilisateur peut accéder à la pompe 20 rapidement et facilement en retirant le capot 15, et sans avoir à démonter l'ensemble du groupe de filtration 1 comme dans l'art antérieur. Le niveau de l'eau N contenu dans le bassin et dans le couloir d'amenée d'eau 8 du groupe de filtration 1 est symbolisé par un trait interrompu court sur les figures 1, 2 et 4. Cette nouvelle disposition de la pompe 20 et de son moteur électrique 21 dans la partie supérieure du groupe de filtration 1 présente de nombreux avantages. En effet, l'eau qui circule en force dans le couloir d'amenée d'eau 8 permet d'évacuer automatiquement les calories par effet Joule dégagées par le moteur électrique 21 et ainsi de le refroidir naturellement et automatiquement sans avoir besoin de prévoir un circuit de refroidissement spécifique comme dans l'art antérieur. De plus, le bruit de fonctionnement du moteur électrique 21 est couvert par l'eau qui assure naturellement son insonorisation. De plus, la technologie dudit moteur électrique 21 étant complètement étanche, sans balai, ni roulement, protège ce moteur de l'agression de l'eau du bassin, garantissant ainsi un fonctionnement durable et fiable sur une période d'au moins 10 ans, contre 3 ans à 5 ans avec la technologie des moteurs asynchrones traditionnellement utilisés pour l'application de l'invention. La présente invention permet également d'utiliser la pompe 20 dans un bassin alimenté en eau salée, ce qui n'était pas possible avec la pompe de l'art antérieur, dont les parties en contact avec l'eau, qui n'étaient pas toutes réalisées en matière inoxydable, corrodaient sous l'action du sel. En outre, la pompe 20 et son moteur électrique 21 sont montés très facilement dans le groupe de filtration 1 et restent accessibles par le dessus du groupe de filtration 1 après avoir retiré le capot 15, sans avoir à démonter le groupe de filtration 1. Ainsi, les opérations d'entretien, de maintenance et de démontage pour l'hivernage sont grandement simplifiées.

La présente invention n'est pas limitée aux exemples de réalisation décrits mais s'étend à toute modification et variante évidentes pour un homme du métier, dans le cadre des revendications ci-jointes.

## Revendications

1. Procédé de filtration d'eau dans un bassin notamment une piscine, dans lequel on crée une circulation forcée (E) de l'eau du bassin à travers au moins un groupe de filtration (1) comportant au moins une bouche d'aspiration (3, 6) et au moins un orifice de refoulement (4, 7), ledit au moins un groupe de filtration comportant une pompe hydraulique centrifuge (20) et au moins une unité de filtration, ladite pompe hydraulique centrifuge comportant un moteur électrique (21) couplé à une turbine centrifuge (23) logée dans un corps de pompe (22), et ledit moteur électrique (21) étant un moteur étanche, sans balai, autopiloté, alimenté en courant continu à très basse tension de 12V à 30V, **caractérisé en ce que** l'on monte ladite pompe hydraulique centrifuge (20) dans la partie supérieure dudit au moins un groupe de filtration (1), de manière totalement intégrée dans un couloir d'amenée d'eau (8) qui est sensiblement horizontal et ouvert en direction dudit bassin par ladite bouche d'aspiration (3, 6), pour que ladite pompe hydraulique centrifuge (20) soit aisément accessible par le dessus dudit groupe de filtration (1) et que ledit moteur électrique (21) de ladite pompe soit en partie ou en totalité immergé dans l'eau qui circule dans ledit couloir d'amenée d'eau (8), de sorte que ledit moteur électrique (21) est automatiquement refroidi et insonorisé par l'eau circulant dans ledit groupe de filtration (1).

2. Procédé de filtration selon la revendication 1, **caractérisé en ce que** l'on utilise un moteur électrique (21) comportant un rotor (30) à aimant(s) permanent(s) (32) entrainé en rotation par un champ tournant généré par un stator (31) pourvu de bobines d'excitation dont l'alimentation électrique est autopilotée par un circuit électronique, et **en ce que** ledit rotor (30) et ledit stator (31) sont encapsulés chacun dans une matière synthétique formant une résine étanche, isolante et résistante à l'eau chlorée et à l'eau salée.

3. Procédé de filtration selon la revendication 2, **caractérisé en ce que** l'on conditionne le stator (31) dudit moteur électrique (21) dans un carter (33), **en ce que** l'on fabrique ledit carter (33) avec un flasque supérieur (49) en une seule pièce, **en ce que** l'on fabrique ledit corps de pompe (22) avec un flasque inférieur (48) en une seule pièce, et **en ce que** l'on assemble ledit moteur électrique (21) audit corps de pompe (22) et audit groupe de filtration (1) par leurs flasques inférieur et supérieur (48, 49) respectifs.

4. Procédé de filtration selon la revendication 3, **caractérisé en ce que** l'on monte ladite turbine centrifuge (23) sur une extrémité inférieure (40) dudit rotor (30) qui sort dudit carter (33), et **en ce que** l'on verrouille la position axiale dudit rotor (30) entre un palier supérieur (42) et un palier inférieur (43) pour garantir son alignement magnétique avec ledit stator (31).

5. Procédé de filtration selon la revendication 3, **caractérisé en ce que** l'on guide en rotation ledit rotor (30) par une broche de guidage (36) axiale fixée au carter (33) qui fait office de palier lisse.

6. Procédé de filtration selon la revendication 1, **caractérisé en ce que** l'on fait tourner ledit moteur électrique (21) à une vitesse sensiblement constante inférieure à 2900 tr/mn, et préférentiellement inférieure à 2000 tr/mn, pour générer un débit d'eau compris entre 4 et 12 m³/h en fonction du point de fonctionnement de la dite pompe hydraulique centrifuge (20).

7. Procédé de filtration selon la revendication 6, **caractérisé en ce que** l'on détermine ledit point de fonctionnement de ladite pompe hydraulique centrifuge (20) en fonction du volume d'eau contenu dans le bassin en paramétrant la vitesse de rotation dudit moteur électrique (21) en usine.

8. Procédé de filtration selon la revendication 1, **caractérisé en ce que**, dans ledit au moins un groupe de filtration (1), l'on dispose ladite pompe hydraulique centrifuge (20) en aval de ladite au moins une unité de filtration.

9. Procédé de filtration selon la revendication 1, **caractérisé en ce que** l'on couvre la consommation électrique totale annuelle de ladite pompe hydraulique centrifuge (20) par la production annuelle d'une source d'énergie électrique renouvelable.

10. Procédé de filtration selon la revendication 9, **caractérisé en ce que** l'on utilise comme source d'énergie électrique renouvelable la production annuelle de deux panneaux photovoltaïques de 250W crête maximum chacun.

11. Groupe de filtration (1) pour mettre en œuvre le procédé de filtration d'eau dans un bassin, notamment une piscine, selon l'une quelconque des revendications précédentes, ledit groupe de filtration comportant au moins une bouche d'aspiration (3, 6) et au moins un orifice de refoulement (4, 7) en communication avec ledit bassin, une pompe hydraulique centrifuge (20) et au moins une unité de filtration, ladite pompe hydraulique centrifuge comportant un moteur électrique (21) couplé à une turbine centrifuge (23) logée dans un corps de pompe (22), ledit moteur électrique (21) étant un moteur étanche, sans balai, alimenté en courant continu à très basse tension de 12V à 30V, **caractérisé en ce que** ladite pompe hydraulique centrifuge (20) est montée dans la partie supérieure dudit groupe de filtration (1) de manière totalement intégrée dans un couloir d'amenée d'eau (8) qui est sensiblement horizontal et ouvert en direction dudit bassin par ladite bouche d'aspiration (3, 6) pour que ladite pompe hydraulique centrifuge (20) soit aisément accessible par le dessus dudit groupe de filtration (1) et que ledit moteur électrique (21) de ladite pompe soit en partie ou en totalité immergé dans l'eau qui circule dans ledit couloir d'amenée d'eau (8), de sorte que ledit moteur électrique (21) est automatiquement refroidi et insonorisé par l'eau circulant dans ledit groupe de filtration (1).

12. Groupe de filtration selon la revendication 11, **caractérisé en ce que** la turbine centrifuge (23) est installée à un niveau inférieur à celui du fond (17) du couloir d'amenée d'eau (8) pour être en charge en permanence.

13. Groupe de filtration selon la revendication 11, **caractérisé en ce que** ledit moteur électrique (21) comporte un rotor (30) à aimant(s) permanent(s) (32) entrainé en rotation par un champ tournant, un stator (31) pourvu de bobines d'excitation agencé pour générer ledit champ tournant, et un circuit électronique alimenté en très basse tension agencé pour auto-piloter l'alimentation électrique desdites bobines d'excitation, ledit rotor (30) et ledit stator (31) étant encapsulés chacun dans une matière synthétique formant une résine étanche, isolante et résistante à l'eau chlorée et à l'eau salée.

14. Groupe de filtration selon la revendication 13, **caractérisé en ce que** ledit stator (31) comporte un carter (33) pourvu d'un flasque supérieur (49), **en ce que** ledit corps de pompe (22) comporte un flasque inférieur (48), et **en ce que** ledit moteur électrique (21) et ledit corps de pompe (22) sont assemblés entre eux et audit groupe de filtration (1) par leurs flasques inférieur et supérieur (48, 49) respectifs.

15. Groupe de filtration selon la revendication 14, **caractérisé en ce que** ledit flasque supérieur (49) est formé d'une seule pièce avec ledit carter (33) dans une matière plastique.

16. Groupe de filtration selon la revendication 14, **caractérisé en ce que** ladite turbine centrifuge (23) est montée à une extrémité inférieure (40) dudit rotor (30) qui sort dudit carter (33), et **en ce que** ledit moteur électrique (21) comporte un palier supérieur (42) disposé entre ledit rotor (30) et ledit carter (33) et un palier inférieur (43) disposé entre ledit rotor (30) et le flasque inférieur (48) dudit corps de pompe (22) pour verrouiller la position axiale dudit rotor (30) et garantir son alignement magnétique avec ledit stator (31).

17. Groupe de filtration selon la revendication 11, **caractérisé en ce que** ladite pompe hydraulique centrifuge (20) est disposée en aval de ladite au moins une unité de filtration.

18. Pompe hydraulique centrifuge (20) pour un groupe de filtration (1) d'eau selon l'une quelconque des revendications 11 à 17 dans un bassin notamment une piscine, ladite pompe hydraulique centrifuge comportant un moteur électrique (21) couplé à une turbine centrifuge (23) logée dans un corps de pompe (22), ledit moteur électrique (21) étant un moteur étanche, sans balai, alimenté en courant continu à très basse tension de 12V à 30V, **caractérisée en ce que** ladite pompe hydraulique centrifuge (20) est agencée pour être montée dans la partie supérieure dudit groupe de filtration (1) de manière totalement intégrée dans un couloir d'amenée d'eau (8) et est agencée pour être en partie ou en totalité immergée dans l'eau qui circule dans ledit couloir d'amenée d'eau (8) de sorte que ledit moteur électrique (21) est automatiquement refroidi et insonorisé par l'eau circulant dans ledit groupe de filtration (1), et **en ce que** ledit moteur électrique (21) comporte un rotor (30) à aimant permanent (32) entrainé en rotation par un champ tournant, un stator (31) pourvu de bobines d'excitation agencé pour générer ledit champ tournant, et un circuit électronique alimenté en très basse tension agencé pour auto-piloter l'alimentation électrique desdites bobines d'excitation, ledit rotor (30) et ledit stator (31) étant encapsulés chacun dans une matière synthétique formant une résine étanche, isolante et résistante à l'eau chlorée et à l'eau salée.

19. Pompe hydraulique centrifuge selon la revendication 18, **caractérisée en ce que** ledit stator (31) est logé dans un carter (33) pourvu d'un flasque supérieur (49), **en ce que** ledit corps de pompe (22) comporte un flasque inférieur (48), et **en ce que** ledit moteur électrique (21) et ledit corps de pompe (22) sont assemblés entre eux par superposition de leurs flasques inférieur et supérieur (48, 49) respectifs.

20. Pompe hydraulique centrifuge selon la revendication 19, **caractérisée en ce que** le carter (33) et le flasque supérieur (49) sont formées d'une seule pièce réalisée en matière plastique.

21. Pompe hydraulique centrifuge selon la revendication 19, **caractérisée en ce que** ladite turbine centrifuge (23) est montée à une extrémité inférieure (40) dudit rotor (30) qui sort dudit carter (33), et **en ce que** ledit moteur électrique (21) comporte un palier supérieur (42) disposé entre ledit rotor (30) et ledit carter (33) et un palier inférieur (43) disposé entre ledit rotor (30) et le flasque inférieur (48) dudit corps de pompe (22) pour verrouiller la position axiale dudit rotor (30) et garantir son alignement magnétique avec ledit stator (31).

22. Pompe hydraulique centrifuge selon la revendication 19, **caractérisée en ce que** ledit corps de pompe (22) comporte deux demi coquilles entre lesquelles tourne ladite turbine centrifuge (23), au moins une entrée axiale (52) et une sortie radiale destinées à communiquer respectivement avec ladite bouche d'aspiration (3, 6) et ledit orifice de refoulement (4, 7) dudit groupe de filtration (1) lorsque ladite pompe hydraulique centrifuge (20) est montée dans ledit groupe de filtration (1).

23. Pompe hydraulique centrifuge selon la revendication 19, **caractérisée en ce que** ledit rotor (30) est guidé en rotation par une broche de guidage (36) axiale, fixée audit carter (33), qui fait office de palier lisse.

24. Pompe hydraulique centrifuge selon la revendication 23, **caractérisée en ce que** ladite broche de guidage (36) est réalisée en une matière résistante à la corrosion.

25. Pompe hydraulique centrifuge selon la revendication 18, **caractérisée en ce que** la turbine centrifuge (23) est une turbine dite « ouverte » pourvue d'ailettes radiales (26) portées par un seul plateau diffuseur (25).

26. Pompe hydraulique centrifuge selon la revendication 25, **caractérisée en ce que** le plateau diffuseur (25) et/ou le diffuseur (28) comportent au moins un trou formant un passage de fluide en direction de la broche de guidage (36).

27. Pompe hydraulique centrifuge selon la revendication 18, **caractérisée en ce que** sa hauteur manométrique est d'au moins 4m.

28. Pompe hydraulique centrifuge selon la revendication 18, **caractérisée en ce que** le circuit électronique dudit moteur électrique (21) est paramétrable en usine pour déterminer une vitesse de rotation adaptée au volume d'eau contenu dans le bassin.

29. Bassin d'eau, notamment une piscine, comportant au moins un groupe de filtration (1) communiquant avec ledit bassin par au moins une bouche d'aspiration (3, 6) et au moins un orifice de refoulement (4, 7) et agencé pour créer une circulation forcée (E) de l'eau du bassin à travers ledit groupe de filtration (1) qui comporte une pompe hydraulique centrifuge (20) et au moins une unité de filtration, ladite pompe hydraulique centrifuge (20) comportant un moteur électrique (21) couplé à une turbine centrifuge (23) logée dans un corps de pompe (22), **caractérisé en ce que** ledit groupe de filtration (1) selon l'une quelconque des revendications 11 à 17 est agencé pour mettre en œuvre le procédé de filtration selon l'une quelconque des revendications 1 à 10, et **en ce que** ladite pompe hydraulique centrifuge (20) est totalement intégrée dans un couloir d'amenée d'eau (8) qui est sensiblement horizontal et ouvert en direction dudit bassin par ladite bouche d'aspiration (3, 6) pour que ladite pompe hydraulique centrifuge (20) soit aisément accessible par le dessus dudit groupe de filtration (1) et que ledit moteur électrique (21) de ladite pompe soit en partie ou en totalité immergé dans l'eau qui circule dans ledit couloir d'amenée d'eau (8) de sorte que ledit moteur électrique (21) est automatiquement refroidi et insonorisé par l'eau circulant dans ledit groupe de filtration (1).

## Patentansprüche

1. Verfahren zum Filtern von Wasser in einem Becken, insbesondere einem Schwimmbecken, bei dem eine Zwangsumwälzung (E) des Beckenwassers über mindestens eine Filteranlage (1) erzeugt wird, die über mindestens einen Saugeinlass (3, 6) und mindestens eine Auslassöffnung (4, 7) verfügt, wobei die mindestens eine Filteranlage dabei eine hydraulische Kreiselpumpe (20) und mindestens eine Filtrationseinheit enthält, wobei die hydraulische Kreiselpumpe einen Elektromotor (21) enthält, der an eine in einem Pumpengehäuse (22) untergebrachte Zentrifugalturbine (23) gekoppelt wird, und wobei es sich bei dem Elektromotor (21) um einen dichten, bürstenlosen, autonom gesteuerten Motor handelt, der mit Gleichstrom mit sehr niedriger Spannung von 12V bis 30V betrieben wird, **dadurch gekennzeichnet, dass** die hydraulische Kreiselpumpe (20) im oberen Teil der mindestens einen Filteranlage (1) montiert wird, so dass sie vollständig in einer Wasserzufuhr (8) integriert ist, die im Wesentlichen horizontal verläuft und in Richtung des Beckens über den Saugeinlass (3, 6) offen ist, so dass die hydraulische Kreiselpumpe (20) leicht von der Oberseite der Filteranlage (1) aus zugänglich ist und der Elektromotor (21) der Pumpe ganz oder teilweise in das Wasser eingetaucht werden kann, das in der Wasserzufuhr (8) zirkuliert, so dass der Elektromotor (21) automatisch durch das in der Filteranlage (1) zirkulierende Wasser gekühlt und schallgedämmt wird.

2. Filterverfahren nach Anspruch 1, **dadurch gekennzeichnet, dass** ein Elektromotor (21) eingesetzt wird, der einen Rotor (30) mit Dauermagnet(en) (32) enthält, in Rotation angetrieben durch ein Drehfeld, erzeugt durch einen Stator (31), versehen mit Erregerspulen, mit einer durch einen elektronischen Schaltkreis autonom gesteuerten Stromversorgung, und dadurch, dass der Rotor (30) und der Stator (31) jeweils in einem synthetischen Material eingekapselt sind, das ein dichtes, isolierendes und chlor- und salzwasserfestes Harz bildet.

3. Filterverfahren nach Anspruch 2, **dadurch gekennzeichnet, dass** der Stator (31) des Elektromotors (21) in einem Behälter (33) verpackt ist, dass der Behälter (33) mit einem oberen Flansch (49) aus einem Stück hergestellt wird, das das Pumpengehäuse (22) mit einem unteren Flansch (48) aus einem Stück hergestellt wird und dadurch dass der Elektromotor (21) mit dem Pumpengehäuse (22) und der Filteranlage (1) über die jeweiligen unteren und oberen Flansche (48, 49) verbunden ist.

4. Filterverfahren nach Anspruch 3, **dadurch gekennzeichnet, dass** die Zentrifugalturbine (23) auf einem unteren Ende (40) des Rotors (30) montiert wird, das aus dem Behälter (33) herausragt, und dass die axiale Position des Rotors (30) zwischen einem oberen Lager (42) und einem unteren Lager (43) verriegelt wird, um seine magnetische Ausrichtung mit dem Stator (31) sicherzustellen.

5. Filterverfahren nach Anspruch 3, **dadurch gekennzeichnet, dass** die Führung in Rotation des Rotors (30) über einen am Behälter (33) befestigten axialen Führungsstift (36) erfolgt, der als Gleitlager dient.

6. Filterverfahren nach Anspruch 1, **dadurch gekennzeichnet, dass** der Elektromotor (21) mit einer im Wesentlichen konstanten Geschwindigkeit von weniger als 2.900 U/min gedreht wird, vorzugsweise von weniger als 2.000 U/min, um einen Wasserdurchsatz zwischen 4 und 12 m³/h zu erzeugen, in Abhängigkeit vom Betriebspunkt der hydraulischen Kreiselpumpe (20).

7. Filterverfahren nach Anspruch 6, **dadurch gekennzeichnet, dass** der Betriebspunkt der hydraulischen Kreiselpumpe (20) in Abhängigkeit vom Wasservolumen, das im Becken enthalten ist, bestimmt wird, indem die Rotationsgeschwindigkeit des Elektromotors (21) im Werk parametriert wird.

8. Filterverfahren nach Anspruch 1, **dadurch gekennzeichnet, dass** in der mindestens einen Filteranlage (1) die hydraulische Kreiselpumpe (20) unterhalb der mindestens einen Filtrationseinheit angeordnet ist.

9. Filterverfahren nach Anspruch 1, **dadurch gekennzeichnet, dass** der gesamte jährliche Energieverbrauch der hydraulischen Kreiselpumpe (20) durch die Jahresproduktion einer erneuerbaren Energiequelle gedeckt wird.

10. Filterverfahren nach Anspruch 9, **dadurch gekennzeichnet, dass** als erneuerbare Energiequelle die Jahresproduktion von zwei Photovoltaikmodulen mit jeweils höchstens 250 W Spitzenleistung verwendet wird.

11. Filteranlage (1) zur Umsetzung des Verfahrens zum Filtern von Wasser in einem Becken, insbesondere einem Schwimmbecken, nach einem der vorangehenden Ansprüchen, wobei die Filteranlage über mindestens einen Saugeinlass (3, 6) und mindestens eine Auslassöffnung (4, 7), die mit dem Becken kommunizieren, über eine hydraulische Kreiselpumpe (20) und mindestens über eine Filtrationseinheit verfügt, wobei die hydraulische Kreiselpumpe einen Elektromotor (21) enthält, der an eine in einem Pumpengehäuse (22) untergebrachte Zentrifugalturbine (23) gekoppelt wird, und wobei es sich bei dem Elektromotor (21) um einen dichten, bürstenlosen, autonom gesteuerten Motor, mit Gleichstrom mit sehr niedriger Spannung von 12V bis 30V betrieben, handelt, **dadurch gekennzeichnet, dass** die hydraulische Kreiselpumpe (20) im oberen Teil der mindestens einen Filteranlage (1) montiert wird, so dass sie vollständig in einer Wasserzufuhr (8) integriert ist, die im Wesentlichen horizontal verläuft und in Richtung des Beckens über den Saugeinlass (3, 6) offen ist, so dass die hydraulische Kreiselpumpe (20) leicht von der Oberseite der Filteranlage (1) aus zugänglich ist und der Elektromotor (21) der Pumpe ganz oder teilweise in das Wasser eingetaucht werden kann, das in der Wasserzufuhr (8) zirkuliert, so dass der Elektromotor (21) automatisch durch das in der Filteranlage (1) zirkulierende Wasser gekühlt und schallgedämmt wird.

12. Filteranlage nach Anspruch 11, **dadurch gekennzeichnet, dass** die Zentrifugalturbine (23) in einer Höhe installiert ist, die unter der des Bodens (17) der Wasserzufuhr (8) liegt, um ständig unter Last zu stehen.

13. Filteranlage nach Anspruch 11, **dadurch gekennzeichnet, dass** der Elektromotor (21) einen Rotor (30) mit Dauermagnet(en) (32) enthält, in Rotation angetrieben durch ein Drehfeld, erzeugt durch einen Stator (31), versehen mit Erregerspulen, die zur Erzeugung des Drehfeldes ausgelegt sind, und einen elektronischen Schaltkreis, gespeist mit sehr niedriger Spannung und ausgelegt zur autonomen Steuerung der Stromversorgung der Erregerspulen, und dadurch dass der Rotor (30) und der Stator (31) jeweils in einem synthetischen Material eingekapselt sind, das ein dichtes, isolierendes und chlor- und salzwasserfestes Harz bildet.

14. Filteranlage nach Anspruch 13, **dadurch gekennzeichnet, dass** der Stator (31) einen Behälter (33) mit einem oberen Flansch (49) enthält, dadurch dass das Pumpengehäuse (22) einen unteren Flansch (48) enthält und dass der Elektromotor (21) und das Pumpengehäuse (22) miteinander und mit der Filteranlage (1) über die jeweiligen unteren und oberen Flansche (48, 49) zusammenmontiert sind.

15. Filteranlage nach Anspruch 14, **dadurch gekennzeichnet, dass** der obere Flansch (49) in einem Stück mit dem Behälter (33) aus einem Kunststoff geformt ist.

16. Filteranlage nach Anspruch 14, **dadurch gekennzeichnet, dass** die Zentrifugalturbine (23) auf einem unteren Ende (40) des Rotors (30) montiert wird, das aus dem Behälter (33) herausragt, und dass der Elektromotor (21) eine obere Stufe (42) enthält, die zwischen dem Rotor (30) und dem Behälter (33) angeordnet ist und eine untere Stufe (43), angeordnet zwischen dem Rotor (30) und dem unteren Flansch (48) des Pumpengehäuses (22), um die axiale Position des Rotors (30) zu verriegeln und seine magnetische Ausrichtung mit dem Stator (31) sicherzustellen.

17. Filteranlage nach Anspruch 11, **dadurch gekennzeichnet, dass** die hydraulische Kreiselpumpe (20) unterhalb der mindestens einen Filtrationseinheit angeordnet ist.

18. Hydraulische Kreiselpumpe (20) für eine Wasserfilteranlage (1) nach einem beliebigen der Ansprüche 11 bis 17 in einem Becken, insbesondere einem Schwimmbad, wobei die hydraulische Kreiselpumpe einen Elektromotor (21), gekoppelt an eine in einem Pumpengehäuse (22) untergebrachte Zentrifugalturbine (23) gekoppelt wird und wobei es sich bei dem Elektromotor (21) um einen dichten, bürstenlosen, autonom-gesteuerten Motor, betrieben mit Gleichstrom mit sehr niedriger Spannung von 12V bis 30V, handelt, **dadurch gekennzeichnet, dass** die hydraulische Kreiselpumpe (20) dazu ausgelegt ist, um im oberen Teil der Filteranlage (1) montiert zu werden, so dass sie vollständig in eine Wasserzufuhr (8) integriert ist, und dazu ausgelegt ist, um ganz oder teilweise in das Wasser eingetaucht zu werden, das in der Wasserzufuhr (8) zirkuliert, so dass der Elektromotor (21) automatisch durch das in der Filteranlage (1) zirkulierende Wasser gekühlt und schallgedämmt wird, und dadurch, dass der Elektromotor (21) einen Rotor (30) mit Dauermagnet(en) (32), in Rotation angetrieben durch ein Drehfeld, einen Stator (31), versehen mit Erregerspulen, ausgelegt zur Erzeugung des Drehfeldes, und einen elektronischen Schaltkreis, betrieben mit sehr niedriger Spannung, ausgelegt zur autonomen Steuerung der Stromversorgung der Erregerspulen enthält, wobei der Rotor (30) und der Stator (31) jeweils in einem synthetischen Material eingekapselt sind, das ein dichtes, isolierendes und chlor- und salzwasserfestes Harz bildet.

19. Hydraulische Kreiselpumpe nach Anspruch 18, **dadurch gekennzeichnet, dass** der Stator (31) in einem Behälter (33) mit einem oberen Flansch (49) untergebracht ist, dadurch dass das Pumpengehäuse (22) einen unteren Flansch (48) enthält und dass der Elektromotor (21) und das Pumpengehäuse (22) durch Überlagerung ihrer jeweiligen unteren und oberen Flansche (48, 49) zusammenmontiert sind.

20. Hydraulische Kreiselpumpe nach Anspruch 19, **dadurch gekennzeichnet, dass** der Behälter (33) und der obere Flansch (49) in einem Stück mit dem Behälter (33) aus einem Kunststoff geformt ist.

21. Hydraulische Kreiselpumpe nach Anspruch 19, **dadurch gekennzeichnet, dass** die Zentrifugalturbine (23) auf einem unteren Ende (40) des Rotors (30) montiert wird, das aus dem Behälter (33) herausragt, und dass der Elektromotor (21) eine obere Stufe (42), die zwischen dem Rotor (30) und dem Behälter (33) angeordnet ist und eine untere Stufe (43) enthält, die zwischen dem Rotor (30) und dem unteren Flansch (48) des Pumpengehäuses (22) angeordnet ist, um die axiale Position des Rotors (30) zu verriegeln und seine magnetische Ausrichtung mit dem Stator (31) sicherzustellen.

22. Hydraulische Kreiselpumpe nach Anspruch 19, **dadurch gekennzeichnet, dass** das Pumpengehäuse (22) zwei Halbschalen, zwischen denen sich die Zentrifugalturbine (23) dreht, mindestens einen axialen Eingang (52) und einen radialen Ausgang enthält, die dazu bestimmt sind, jeweils mit dem Saugeinlass (3, 6) und der Auslassöffnung (4, 7) der Filteranlage (1) zu kommunizieren, wenn die hydraulische Kreiselpumpe (20) in der Filteranlage (1) montiert ist.

23. Hydraulische Kreiselpumpe nach Anspruch 19, **dadurch gekennzeichnet, dass** die Führung in Rotation des Rotors (30) über einen am Behälter (33) befestigten axialen Führungsstift (36) erfolgt, der als Gleitlager dient.

24. Hydraulische Kreiselpumpe nach Anspruch 23, **dadurch gekennzeichnet, dass** der Führungsstift (36) aus einem korrosionsfesten Material besteht.

25. Hydraulische Kreiselpumpe nach Anspruch 18, **dadurch gekennzeichnet, dass** die Zentrifugalturbine (23) eine sogenannten "offene" Turbine mit radialen Flügeln (26) auf einer einzigen Verteilerplatte (25) ist.

26. Hydraulische Kreiselpumpe nach Anspruch 25, **dadurch gekennzeichnet, dass** die Verteilerplatte (25) und/oder der Verteiler (28) mindestens ein Loch enthalten, das einen Flüssigkeitsdurchlass in Richtung des Führungsstiftes (36) bildet.

27. Hydraulische Kreiselpumpe nach Anspruch 18, **dadurch gekennzeichnet, dass** ihre manometrische Förderhöhe mindestens 4 m beträgt.

28. Hydraulische Kreiselpumpe nach Anspruch 18, **dadurch gekennzeichnet, dass** der elektronische Schaltkreis des Elektromotors (21) im Werk parametriert werden kann, um eine Rotationsgeschwindigkeit festzulegen, die an das im Becken enthaltene Wasservolumen angepasst ist.

29. Wasserbecken, insbesondere ein Schwimmbecken, das mindestens eine Filteranlage (1) enthält, die mit dem Becken über mindestens einen Saugeinlass (3, 6) und mindestens eine Auslassöffnung (4, 7) kommuniziert und dazu ausgelegt ist, um eine Zwangsumwälzung (E) des Beckenwassers über die Filteranlage (1) zu erzeugen, die eine hydraulische Kreiselpumpe (20) und mindestens eine Filteranlage enthält, wobei die hydraulische Kreiselpumpe einen Elektromotor (21) enthält, der an eine in einem Pumpengehäuse (22) untergebrachte Zentrifugalturbine (23) gekoppelt ist, **dadurch gekennzeichnet, dass** die Filteranlage (1) nach einem der Ansprüche 11 bis 17 dazu ausgelegt ist, um das Filterverfahren nach einem der Ansprüche 1 bis 10 umzusetzen, und dadurch dass die hydraulische Kreiselpumpe (20) vollständig in einer Wasserzufuhr (8) integriert ist, die im Wesentlichen horizontal verläuft und in Richtung des Beckens über den Saugeinlass (3, 6) offen ist, so dass die hydraulische Kreiselpumpe (20) leicht von der Oberseite der Filteranlage (1) aus zugänglich ist und der Elektromotor (21) der Pumpe ganz oder teilweise in das Wasser eingetaucht werden kann, das in der Wasserzufuhr (8) zirkuliert, so dass der Elektromotor (21) automatisch durch das in der Filteranlage (1) zirkulierende Wasser gekühlt und schallgedämmt wird.

## Claims

1. A filtration method for filtering water in a pool, in particular a swimming pool, in which method a forced flow (E) of water is generated so that water is caused to flow from and back into the pool through at least one filtration unit (1) having at least one suction intake (3, 6), and at least one delivery orifice (4, 7), said at least one filtration unit having a centrifugal hydraulic pump (20) and at least one filtration device, said centrifugal hydraulic pump having an electric motor (21) coupled to a centrifugal turbine (23) housed in a pump body (22), and said electric motor (21) being a sealed, brushless, autonomously controlled motor fed with direct current at very low voltage of in the range 12V to 30V, said filtration method being **characterized in that** said centrifugal hydraulic pump (20) is mounted in the upper portion of said at least one filtration unit (1), in such a manner as to be fully incorporated into a water feed corridor (8) that is substantially horizontal and open towards said pool via said suction intake (3, 6), so that said centrifugal hydraulic pump (20) is easily accessible from the top of said filtration unit (1), and so that said electric motor (21) of said pump is partially or fully immersed in the water that is flowing along said water feed corridor (8), so that said electric motor (21) is cooled and sound-proofed automatically by the water flowing through said filtration unit (1).

2. A filtration method according to claim 1, **characterized in that** an electric motor (21) is used that has a rotor (30) having one or more permanent magnets (32) driven in rotation by a rotating field generated by a stator (31) provided with excitation windings, electrical powering of which is controlled autonomously by an electronic circuit, and **in that** said rotor (30) and said stator (31) are each encapsulated in a synthetic material forming a sealing and insulating resin that withstands chlorinated water and saltwater.

3. A filtration method according to claim 2, **characterized in that** the stator (31) of said electric motor (21) is packaged in a casing (33), **in that** said casing (33) is manufactured with an upper flange (49) made integrally in one piece with it, **in that** said pump body (22) is manufactured with a lower flange (48) made integrally in one piece with it, and **in that** said electric motor (21) is assembled to said pump body (22) and to said filtration unit (1) via their respective lower and upper flanges (48, 49).

4. A filtration method according to claim 3, **characterized in that** said centrifugal turbine (23) is mounted on a lower end (40) of said rotor (30) that projects from said casing (33), and **in that** the axial position of said rotor (30) between an upper bearing (42) and a lower bearing (43) is locked to guarantee said rotor (30) is magnetically aligned with said stator (31).

5. A filtration method according to claim 3, **characterized in that** said rotor (30) is guided in rotation by an axial guide pin (36) that is fastened to the casing (33) and that serves as a smooth bearing.

6. A filtration method according to claim 1, **characterized in that** said electric motor (21) is caused to rotate at a substantially constant speed of less than 2900 rpm, and preferably of less than 2000 rpm, for generating a flow-rate of water lying in the range 4 m³/h to 12 m³/h as a function of the operating point of said centrifugal hydraulic pump (20).

7. A filtration method according to claim 6, **characterized in that** said operating point of said centrifugal hydraulic pump (20) is determined as a function of the volume of water contained in the pool by parameterizing the speed of rotation of said electric motor (21) in the factory.

8. A filtration method according to claim 1, **characterized in that**, in said at least one filtration unit (1), said centrifugal hydraulic pump (20) is disposed downstream from said at least one filtration device.

9. A filtration method according to claim 1, **characterized in that** the total annual electricity consumption of said centrifugal hydraulic pump (20) is covered by the annual generation from a renewable electrical energy source.

10. A filtration method according to claim 9, **characterized in that** the annual generation from two photovoltaic panels of a maximum of 250 W peak each is used as a renewable electrical energy source.

11. A filtration unit (1) for implementing the filtration method for filtering water in a pool, in particular a swimming pool, according to any preceding claims, said filtration unit having at least one suction intake (3, 6) and at least one delivery orifice (4, 7) in communication with said pool, a centrifugal hydraulic pump (20) and at least one filtration device, said centrifugal hydraulic pump having an electric motor (21) coupled to a centrifugal turbine (23) housed in a pump body (22), said electric motor (21) being a sealed, brushless, autonomously controlled motor fed with direct current at very low voltage of in the range 12V to 30V, said filtration unit being **characterized in that** said centrifugal hydraulic pump (20) is mounted in the upper portion of said at least one filtration unit (1), in such a manner as to be fully incorporated into a water feed corridor (8) that is substantially horizontal and open towards said pool via said suction intake (3, 6), so that said centrifugal hydraulic pump (20) is easily accessible from the top of said filtration unit (1), and so that said electric motor (21) of said pump is partially or fully immersed in the water that is flowing along said water feed corridor (8), so that said electric motor (21) is cooled and sound-proofed automatically by the water flowing through said filtration unit (1).

12. A filtration unit according to claim 11, **characterized in that** the centrifugal turbine (23) is installed at a lower level than the level of the floor (17) of the water feed corridor (8) so as to be under load permanently.

13. A filtration unit according to claim 11, **characterized in that** said electric motor (21) has a rotor (30) having one or more permanent magnets (32) driven in rotation by a rotating field, a stator (31) provided with excitation windings and arranged to generate said rotating field, and an electronic circuit powered at very low voltage and arranged to autonomously control the electrical powering of said excitation windings, said rotor (30) and said stator (31) each being encapsulated in a synthetic material forming a sealing and insulating resin that withstands chlorinated water and saltwater.

14. A filtration unit according to claim 13, **characterized in that** said stator (31) has a casing (33) provided with an upper flange (49), **in that** said pump body (22) has a lower flange (48), and **in that** said electric motor (21) and said pump body (22) are assembled together and to said filtration unit (1) via their respective lower and upper flanges (48, 49).

15. A filtration unit according to claim 14, **characterized in that** said upper flange (49) is formed integrally in one piece with said casing (33) of a plastics material.

16. A filtration unit according to claim 14, **characterized in that** said centrifugal turbine (23) is mounted on a lower end (40) of said rotor (30) that projects from said casing (33), and **in that** said electric motor (21) has an upper bearing (42) disposed between said rotor (30) and said casing (33), and a lower bearing (43) disposed between said rotor (30) and the lower flange (48) of said pump body (22) to lock the axial position of said rotor (30) and to guarantee it is magnetically aligned with said stator (31).

17. A filtration unit according to claim 11, **characterized in that** said centrifugal hydraulic pump (20) is disposed downstream from said at least one filtration device.

18. A centrifugal hydraulic pump (20) for a filtration unit (1) according to any one of claims 11 to 17 for filtering water in a pool, in particular a swimming pool, said centrifugal hydraulic pump having an electric motor (21) coupled to a centrifugal turbine (23) housed in a pump body (22), said electric motor (21) being a sealed, brushless motor fed with direct current at very low voltage of in the range 12V to 30V, said centrifugal hydraulic pump (20) being **characterized in that** it is arranged to be mounted in the upper portion of said filtration unit (1) in such a manner as to be fully incorporated into a water feed corridor (8), and is arranged to be partially or fully immersed in the water that is flowing along said water feed corridor (8) so that said electric motor (21) is cooled and sound-proofed automatically by the water flowing through said filtration unit (1), and **in that** said electric motor (21) has a rotor (30) having a permanent magnet (32) driven in rotation by a rotating field, a stator (31) provided with excitation windings and arranged to generate said rotating field, and an electronic circuit powered at very low voltage and arranged to autonomously control the electrical powering of said excitation windings, said rotor (30) and said stator (31) being each encapsulated in a synthetic material forming a sealing and insulating resin that withstands chlorinated water and saltwater.

19. A centrifugal hydraulic pump according to claim 18, **characterized in that** said stator (31) is housed in a casing (33) provided with an upper flange (49), **in that** said pump body (22) has a lower flange (48), and **in that** said electric motor (21) and said pump body (22) are assembled together by their respective lower and upper flanges (48, 49) being mutually superposed.

20. A centrifugal hydraulic pump according to claim 19, **characterized in that** the casing (33) and the upper flange (49) are formed integrally in one piece made of a plastics material.

21. A centrifugal hydraulic pump according to claim 19, **characterized in that** said centrifugal turbine (23) is mounted on a lower end (40) of said rotor (30) that projects from said casing (33), and **in that** said electric motor (21) has an upper bearing (42) disposed between said rotor (30) and said casing (33), and a lower bearing (43) disposed between said rotor (30) and the lower flange (48) of said pump body (22) to lock the axial position of said rotor (30) and to guarantee it is magnetically aligned with said stator (31).

22. A centrifugal hydraulic pump according to claim 19, **characterized in that** said pump body (22) has two half-shells between which said centrifugal turbine (23) rotates, at least one axial inlet (52) and at least one radial outlet, which inlet(s) and outlet(s) are designed to communicate respectively with said suction intake (3, 6) and with said delivery orifice (4, 7) of said filtration unit (1) when said centrifugal hydraulic pump (20) is mounted in said filtration unit (1).

23. A centrifugal hydraulic pump according to claim 19, **characterized in that** said rotor (30) is guided in rotation by an axial guide pin (36) that is fastened to said casing (33) and that serves as a smooth bearing.

24. A centrifugal hydraulic pump according to claim 23, **characterized in that** said guide pin (36) is made of a material that withstands corrosion.

25. A centrifugal hydraulic pump according to claim 18, **characterized in that** the centrifugal turbine (23) is an "open" turbine that is provided with radial vanes (26) carried by a single diffuser plate (25).

26. A centrifugal hydraulic pump according to claim 25, **characterized in that** the diffuser plate (25) and/or the diffuser (28) are provided with at least one hole forming a passageway for enabling fluid to pass through towards the guide pin (36).

27. A centrifugal hydraulic pump according to claim 18, **characterized in that** its dynamic head is at least 4 m.

28. A centrifugal hydraulic pump according to claim 18, **characterized in that** the electronic circuit of said electric motor (21) is parameterizable in the factory to determine a speed of rotation adapted to suit the volume of water contained in the pool.

29. A pool of water, in particular a swimming pool, having at least one filtration unit (1) that communicates with said pool via at least one suction intake (3, 6) and via at least one delivery orifice (4, 7), and that is arranged to generate a forced flow (E) of water from and back into the pool through said filtration unit (1), which has a centrifugal hydraulic pump (20) and at least one filtration device, said centrifugal hydraulic pump (20) including an electric motor (21) coupled to a centrifugal turbine (23) housed in a pump body (22), said pool of water being **characterized in that** said filtration unit (1) according to any one of claims 11 to 17 is arranged to implement the filtration method according to any one of claims 1 to 10, and **in that** said centrifugal hydraulic pump (20) is fully incorporated in a water feed corridor (8) that is substantially horizontal and open towards said pool via said suction intake (3, 6) so that said centrifugal hydraulic pump (20) is easily accessible from the top of said filtration unit (1) and so that said electric motor (21) of said pump is partially or fully immersed in the water that is flowing along said water feed corridor (8) so that said electric motor (21) is cooled and sound-proofed automatically by the water flowing through said filtration unit (1).
